Europäisches Patentamt

European Patent Office

Office européen des brevets

(11) Veröffentlichungsnummer: **0 290 752**
**A2**

(12) **EUROPÄISCHE PATENTANMELDUNG**

(21) Anmeldenummer: **88104275.8**

(22) Anmeldetag: **17.03.88**

(51) Int. Cl.⁴: **F16J 15/34**

(30) Priorität: **11.05.87 DE 3715680**

(43) Veröffentlichungstag der Anmeldung:
**17.11.88 Patentblatt 88/46**

(84) Benannte Vertragsstaaten:
**AT BE CH DE FR GB IT LI NL**

(71) Anmelder: **Feodor Burgmann Dichtungswerke GmbH & Co.**
**Äussere Sauerlacher Strasse 6-8**
**D-8190 Wolfratshausen 1(DE)**

(72) Erfinder: **Feigl, Peter, Dipl.-Ing.**
**Am Waldrand 2 A**
**D-8137 Berg 4(DE)**

(74) Vertreter: **Empl, Karl et al**
**Patentanwälte Dipl.-Ing. K. Empl Dipl.-Ing.,**
**Dipl.-Wirtsch.-Ing. K. Fehners**
**Schumannstrasse 2**
**D-8000 München 80(DE)**

(54) **Gleitringdichtung mit einer Kühleinrichtung.**

(57) Gleitringdichtung mit einer vom Dichtungsgehäuse (6) umschlossenen Kühleinrichtung (6), welche die durch Reibung der Gleitringe (3, 4) erzeugte und ggf. durch Leitung und Konvektion in das Dichtungsgehäuse eingebrachte Wärme durch ein im Kreislauf geführtes Kühlmedium über einen Wärmetauscher (10) an durch diesen geleitetes Kühlwasser abgibt. Der Wärmetauscher (10) hat im wesentlichen hohlzylindrische Gestalt und enthält achsparallel zwischen zwei ringförmigen Rohrböden (14, 15) verlaufende Kühlrohre (16) sowie je eine die Rohrböden verbindende Außenwand (17a) und Innenwand (13), die in ihrer Gesamtheit eine mit dem Kühlwasser beschickte Kammer umgrenzen. Die Innenwand umgibt den am Dichtungsgehäuse (6) drehfest gehaltenen Gleitring (4) und seine Trägerhülse (4a) und den mit der Welle (2) rotierenden Gleitring (3). Letzterer besitzt an seinem Umfang ein Außengewinde (11a), das von einem Innengewinde (11b) an der Innenwand (13) umgeben ist. Beide Gewinde bilden eine Pumpvorrichtung, die das Kühlmedium im Kreislauf durch das Innere der Kühlrohre hindurch, sowie am Dichtspalt der Gleitringe (3, 4) und an einem ringförmigen Magnetfilter (12) vorbeifördert. Das Magnetfilter ist an einem endseitigen, abnehmbaren Deckel (7) des Dichtungsgehäuses angeordnet.

FIG. 1

## Gleitringdichtung mit einer Kühleinrichtung.

Die Erfindung betrifft eine Gleitringdichtung zur Abdichtung einer durch die Öffnung einer Wandung herausgeführten Welle, mit einem drehfest an der Welle gehaltenen und gegen diese abgedichteten ersten Gleitring und einem drehfest bezüglich der Wandung gehaltenen und gegen diese abgedichteten zweiten Gleitring, von denen einer in Axialrichtung verschieblich gelagert und mittels Federn gegen den anderen angedrückt ist, sowie mit einer Kühleinrichtung, enthaltend einen die Welle konzentrisch umgebenden, in einem von einer Außenwand und einer Innenwand des Dichtungsgehäuses begrenzten zylindrischen Hohlraum angeordneten Rohr-Wärmetauscher, dessen Sekundärkreis mit Kühlwasser beschickbar ist und dessen Primärkreis Bestandteil einer ein Kühlmedium am Dichtspalt der Gleitringe vorbeileitenden, internen Kreislaufführung ist, die einen zwischen der Innenwand und der Welle verlaufenden Rezirkulationskanal enthält, der eine von der Welle angetriebene Pumpvorrichtung und einen den Dichtspalt der Gleitringe umgebenden Ringraum aufweist.

Bei einer bekannten derartigen Gleitringdichtung (DE-GM 72 21 700) in doppelt wirkender Ausbildung enthält der Wärmetauscher ein einziges durchgehendes Kühlrohr, das durch die Innenwand des Dichtungsgehäuses in den zylindrischen Hohlraum eintritt, in diesem in Form einer zylindrischen, zur Achse der Welle koaxialen Schraubenfeder verläuft und an einer axial versetzten Stelle wieder durch die Außenwand herausgeführt ist. Das innen vom Kühlwasser durchströmte Kühlrohr ist außen mit dem Kühlmedium der internen Kreislaufführung beaufschlagt, welche über je eine Ablaufbohrung und Zulaufbohrung sowie den ringförmigen Rezirkulationskanal geschlossen ist.

Nachteilig ist bei dieser Gleitringdichtung insbesondere der einen großen Leistungsbedarf der Pumpe bedingende hohe Strömungswiderstand der Kreislaufführung für das Kühlmedium, der ebenfalls hohe, vom Kühlwasser zu überwindende Strömungswiderstand und der erhebliche Aufwand für die Reinigung des Wärmetauschers von zwischen den Windungen der Kühlrohre befindlichen Ablagerungen, welche besonders dann auftreten können, wenn die Gleitringdichtung einfach wirkend ausgebildet ist und als Kühlmedium das abzudichtende Medium dient.

Bekannt ist auch eine doppelt wirkende Gleitringdichtung mit einer von der abzudichtenden Welle angetriebenen Pumpvorrichtung (DE-OS 24 11 166), bei welcher der Wärmetauscher einen rohrförmigen Mantel enthält, der auf die mit einer zylindrischen äußeren Umfangsfläche ausgebildeten Außenwand des Dichtungsgehäuses aufgeschoben ist. Der Mantel enthält an seinem Innenumfang eine gewindeförmig eingeschnittene Rille, die zusammen mit der äußeren Umfangsfläche der Außenwand einen wendelförmigen Kanal bildet, der den Primärkreis des Wärmetauschers darstellt und der durch Bohrungen der Außenwand mit dem die Pumpvorrichtung enthaltenden Rezirkulationskreis verbunden ist. Den Sekundärkreis des Wärmetauschers bilden nach außen vorstehende Rippen des Mantels, über die ein von der Welle angetriebener Ventilator aus der Atmosphäre entnommene Kühlluft bläst. Bei einer bekannten Modefikation dieser Gleitringdichtung (DE-OS 28 27 364) ist der Mantel auf die äußere zylindrische Umfangsfläche einer Hülse mit radial nach innen vorstehenden, ebenfalls von der Kühlluft bestrichenen Rippen aufgeschoben, welche die Außenwand des Dichtungsgehäuses umgibt. Die Primärkreise der Wärmetauscher der beiden vorstehend erläuterten Gleitringdichtungen sind zwar für Reinigungsarbeiten gut zugänglich, weisen aber hohe Strömungswiderstände auf.

Bekannt ist ferner eine für ein Rührwerk bestimmte, doppelt wirkende Gleitringdichtung (DE-OS 15 25 558), bei der in einem Ringraum zwischen einem äußeren Gleit-und Gegenringpaar und einem mit seinen Gleitflächen in der gleichen Radialebene gelegenen, im Durchmesser kleineren inneren Gleit-und Gegenringpaar ein kreisförmiges Kühlrohr angeordnet ist, das im Inneren in einzelne Sektoren aufgeteilt ist, durch die mittels achsparalleler Zu-und Ablaufrohre Kühlwasser hindurchgeführt wird. Der Ringraum ist mit einem unter Druck stehenden flüssigen Sperrmedium gefüllt, das sich wegen der geringen Wellendrehzahl praktisch in Ruhe befindet und für die Wärmeübertragung von den Gleit-und Gegenringen zum Kühlrohr sorgen soll. Diese Kühleinrichtung ist auf die erläuterte spezielle Bauform einer Gleitringdichtung abgestellt, ist erst nach völliger Demontage der Dichtung für Wartungsarbeiten zugänglich und in ihrer Leistungsfähigkeit durch die geringe Kühlfläche und das praktisch ruhende Sperrmedium begrenzt.

Bekannt ist es auch (DE-GM 19 82 170), den in Axialrichtung beweglich ausgebildeten Gleitring mit einem Hohlraum auszustatten, durch den mittels schraubenförmig die Welle umschließender Zu-und Ablaufrohre ein Kühlmedium hindurchgeführt wird. Diese Zu-und Ablaufrohre befinden sich innerhalb eines weiteren Külmediums, können aber nicht die Funktion eines wirksamen Wärmetauschers ausüben, weil sie einerseits im Sinne einer Erwärmung und andererseits einer Abkühlung des durch diese Rohre hindurchgeführten Kühlmediums wirken.

Bekannt ist es ferner (DE-GM 71 44 142), die Pumpvorrichtung einer Gleitringdichtung als Schraubengangpumpe auszubilden, deren Außengewinde an dem mit der Welle rotierenden Gegenring ausgebildet ist und deren dazu gegenläufiges Innengewinde in eine am Dichtungsgehäuse feste Hülse eingeschnitten ist. Bekannt sind auch Gleitringdichtungen (CH-PS 4 23 384) mit einer von der Welle angetriebenen Pumpvorrichtung, welche eine Kühl-oder Schmierflüssigkeit im Kreislauf aufeinanderfolgend durch einen Wärmetauscher und einen Magnetfilter fördert, die beide gesondert vom Dichtungsgehäuse angeordnet und an Rohrleitungen angeschlossen sind.

Aufgabe der Erfindung ist es, eine Gleitringdichtung der eingangs erläuterten Art so weiterzubilden, daß bei kleinen Abmessungen und geringem Bauaufwand die Leistungsfähigkeit der Kühleinrichtung gesteigert wird und alle Einzelteile für die Wartung und Instandhaltung leicht zugänglich sind.

Die Erfindung löst diese Aufgabe dadurch, daß der Wärmetauscher eine Mehrzahl von im wesentlichen parallel zur Achse der Welle verlaufende Kühlrohre enthält, die mit ihren einen Enden in einem ersten Rohrboden und mit ihren anderen Enden in einem zweiten Rohrboden abdichtend gehalten sind, daß die Rohrböden jeweils ringförmig ausgebildet und koaxial zur Achse der Welle angeordnet sind, sowie zusammen mit der Innenwand, der Außenwand und den von außen mit Kühlwasser beaufschlagten Kühlrohren den Sekundärkreis begrenzen, daß jedem Rohrboden axial ein vom Dichtungsgehäuse begrenzter, mit dem Inneren der Kühlrohre kommunizierender Ringraum vorgelagert ist und daß beide Ringräume durch den Rezirkulationskanal miteinander verbunden sind.

Weiterbildungen der Erfindung sind Gegenstand der Unteransprüche.

Ein Ausführungsbeispiel der Erfindung wird in der Folge anhand der Zeichnung näher erläutert, in der zeigt

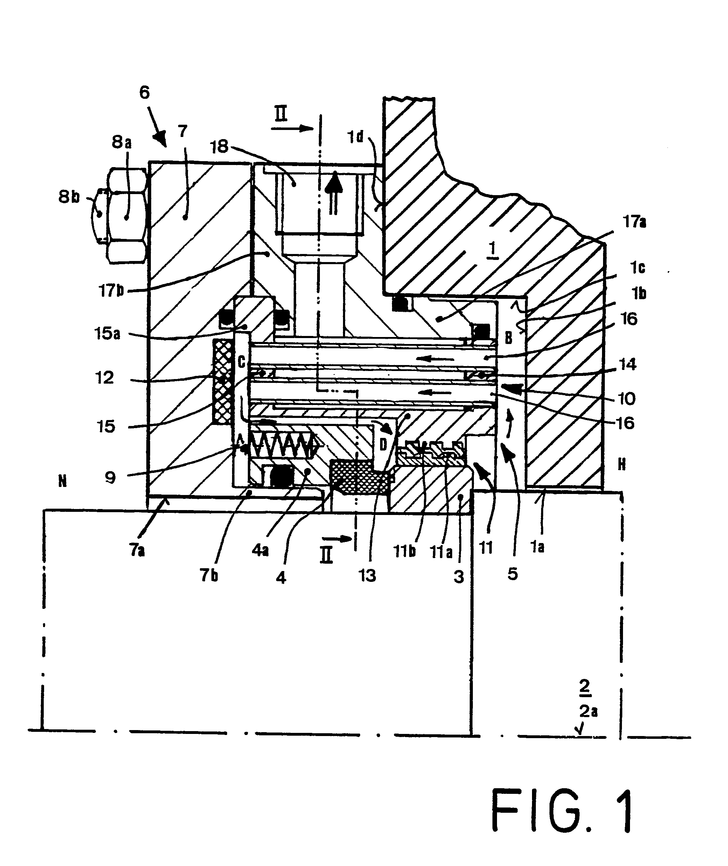

Fig. 1 einen Längsschnitt durch die obere Hälfte einer erfindungsgemäß ausgebildeten Gleitringdichtung und

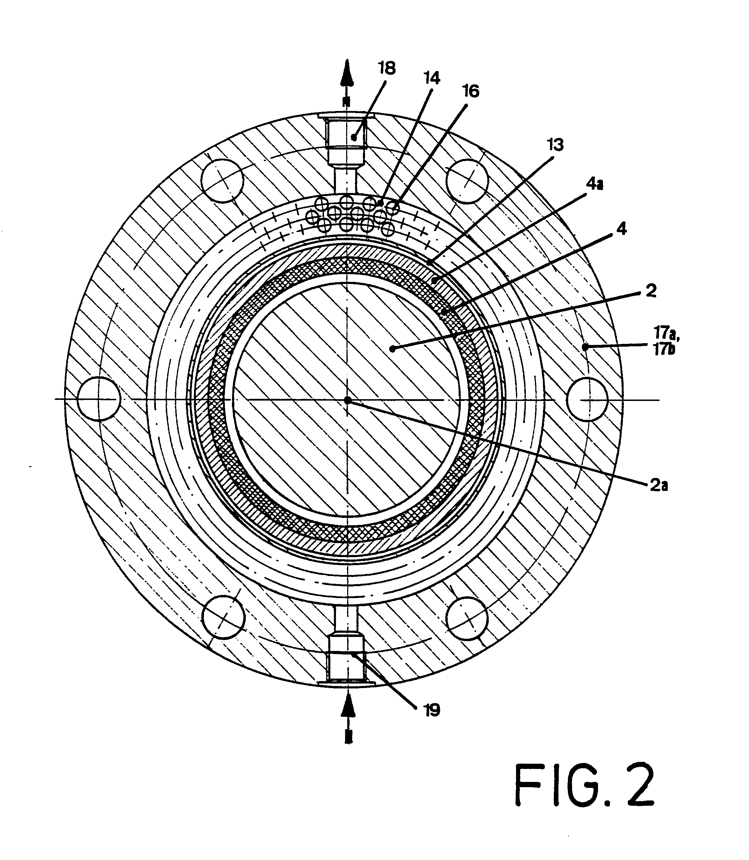

Fig. 2 einen Querschnitt nach der Linie II-II in Fig. 1 in verkleinertem Maßstab. Die Gleitringdichtung ist zur Abdichtung einer die Öffnung 1a einer Wandung 1 durchdringenden Welle 2 bestimmt. Sie umfaßt im wesentlichen einen unbeweglich an der Welle 2 gehaltenen und gegen diese abgedichteten ersten Gleitring 3, einen federnd gegen diesen angedrückten, bezüglich der Wandung 1 drehfest gehaltenen und abgedichteten zweiten Gleitring 4, eine ein Kühlmedium rückkühlende und im Kreislauf am Dichtspalt der Gleitringe vorbeiführende, in ihrer Gesamtheit mit 5 bezeichnete Kühleinrichtung und ein die genannten Bauteile umschließendes, in seiner Gesamtheit mit 6 bezeichnetes Dichtungsgehäuse.

Der ersten Abschnitt des mehrteiligen Dichtungsgehäuses 6 ist an der Außenseite der Wandung 1 ausgebildet und ist begrenzt durch eine radial äußere, in einer zur Achse 2a der Welle 2 lotrechten Ebene gelegene Anlagefläche 1d, eine zylindrische Bohrung 1c und eine deren Boden bildende, in einer ebenfalls zur Achse 2a lotrechten Ebene gelegene, radial innere Stirnfläche 1b, an welche sich die Öffnung 1a anschließt. Die Öffnung 1a umschließt die Welle 2 mit geringem radialen Spiel, so daß das an der Hochdruckseite H anstehende abzudichtende Medium zwar in das Innere des Dichtungsgehäuses 6 eindringen und dort als Kühlmedium wirksam werden kann und das durch Leckage austretende Kühlmedium ersetzen kann. Andererseits verhindert aber die als Drosselstrecke wirksame Öffnung 1a eine Austauschströmung und damit eine Wärmezufuhr durch Konvektion in das Innere des Dichtungsgehäuses 6 bei heißem Medium an der Hochdruckseite H.

Den zweiten und dritten Abschnitt des Dichtungsgehäuses 6 formen (nachstehend noch näher erläuterte) Teile eines Wärmetauschers 10, nämlich ein Flansch 17b, eine Außenwand 17a und ein Ringwulst 15a. Den vierten Teil des Dichtungsgehäuses bildet schließlich ein an seinem freien axialen Ende angeordneter Deckel 7, zwischen dem und der Anlagefläche 1d der Wandung 1 der Flansch 17b und der Ringwulst 15a mittels Muttern 8a und in der Wandung gehaltener Stehbolzen 8b eingespannt sind.

Vom Deckel 7 steht im Bereich seiner Durchtrittsöffnung 7a für die Welle 2 in das Innere des Dichtungsgehäuses 6 ein rohrförmiger Ansatz 7b mit zylindrischer äußerer Umfangsfläche vor. Auf dieser ist eine den zweiten Gleitring 4 haltende Trägerhülse 4a in Axialrichtung verschieblich und durch (nicht dargestellte) Mittel drehfest gehalten, sowie durch einen 0-Ring als Sekundärdichtung abgedichtet. Eine Anordnung von Schrauben-Druckfedern 9 stützt sich zwischen dem Deckel 7 und dem Trägerring 4a ab und hält dadurch die Gleitfläche des zweiten Gleitringes 4 mit axialer Vorspannung an derjenigen des ersten Gleitringes 3.

Die Kühleinrichtung 5 umfaßt einen in seiner Gesamtheit mit 10 bezeichneten Wärmetauscher, eine Pumpvorrichtung 11, eine diese beiden verbindende Kreislaufführung und eine in dieser angeordnetes Magnetfilter 12.

Der Wärmetauscher 10 enthält eine rohrförmige Innenwand 13, an deren beiden axialen Enden ein erster Rohrboden 14 bzw. ein zweiter Rohrboden 15 einstückig angeformt sind.Die ringförmigen Rohrböden 14, 15 erstrecken sich jeweils in zur Achse 2a lotrechten Ebenen von der Innenwand 13 radial nach außen und enthalten auf unterschiedlichen Durchmessern jeweils eine Mehrzahl von um den Umfang verteilter Bohrungen, in denen gerade und parallel zur Achse2a verlaufende Kühlrohre 16 gehalten und abgedichtet sind. Der zweite Rohrboden 15 weist an seinem Umfang einen im Querschnitt rechteckigen Ringwulst 15a auf, dessen zylindrischer Außenumfang größer als derjenige des ersten Rohrbodens 14 ist, dessen axial innere Stirnfläche mit der der Hochdruckseite H zugewandten inneren Stirnseite des zweiten Rohrbodens 15 fluchtet und dessen axial äußere Stirnfläche über die äußere Stirnseite dieses Rohrbodens vorsteht.

Die aus der Innenwand 13, den beiden Rohrböden 14, 15 und den Kühlrohren 16 bestehende Baueinheit ist in eine rohrförmige Außenwand 17a gleicher axialer Länge eingeschoben, deren Innendurchmesser gleich dem Außendurchmesser des der Stirnfläche 1b der Wandung 1 am nächsten gelegenen ersten Rohrbodens 14 ist. Dessen zylindrische Umfangsfläche stützt sich radial gegen die Innenfläche der Außenwand 17a ab und ist gegen diese Innenfläche durch einen 0-Ring abgedichtet. Von der Außenwand 17a steht radial nach außen ein einstückig angeformter, von einer Ablaufbohrung 18 und einer um 180° versetzten Zulaufbohrung 19 radial durchdrungener Flansch 17b vor, dessen axiale Breite kleiner als die Länge der Außenwand ist und dessen eine Stirnfläche mit der Außenseite des zweiten Rohrbodens 15 fluchtet, wenn die vorerwähnte Baueinheit in die Außenwand 17a eingeschoben ist. In diesem Zustand wird der Ringwulst 15a mit einem Teil seiner axialen Breite von einer daran angepaßten Innenschulter der Außenwand 17a bzw. des Flansches 17b aufgenommen, welcher den zweiten Rohrboden 15 mit ihrem zylindrischen Innenumfang radial und mit ihrem Grund axial in Richtung zur Stirnfläche 1b abstützt.

Die Außenwand 17a ist in die gleichen Innendurchmesser aufweisende Bohrung 1c eingeschoben und durch einen 0-Ring abgedichtet, wobei die andere Stirnfläche des Flansches 17b an der Stirnfläche 1c der Wandung 1 anliegt. Die axiale Tiefe der Bohrung 1c ist dabei so groß gewählt, daß zwischen der äußeren axialen Stirnseite des ersten Rohrbodens 14 und der Stirnfläche 1b der Wandung 1 ein Abstand verbleibt und dadurch ein mit dem Inneren der Kühlrohre 16 kommunizierender erster Ringraum B geschaffen wird, der radial nach innen bis zur Welle 2 reicht. Der Deckel 7 umfaßt mit einer Innenschulter den Ringwulst 15a, wobei der Boden dieser Innenschulter zur äußeren axialen Stirnseite des zweiten Rohrbodens 15 einen Abstand aufweist und dadurch ein mit dem Inneren der Kühlrohre 16 kommunizierender zweiter Ringraum C geschaffen wird, der radial nach innen bis zum Ansatz 7b bzw.

zur Trägerhülse 4a des Gleitringes 4 reicht.

Eine den ersten Gleitring umfassende Bandage weist ein Außengewinde 11a auf. Dieses wird mit geringem radialen Spiel von einem entgegengesetzte Gangrichtung aufweisenden Innengewinde 11b umgeben, das in einem radial nach innen vorspringenden Wulst dieser Innenwand 13 ausgebildet ist. Das Außengewinde 11a und das Innengewinde 11b bilden zusammen die Pumpvorrichtung 11. Diese fördert beim Umlauf der Welle 2 das Kühlmedium in den ersten Ringraum B, von dort durch die Kühlrohre 16, den zweiten Ringraum C und einem zwischen der Trägerhülse 4a und der Innenwand 13 verbleibenden ringförmigen Kanal zu einem den Dichtspalt der beiden Gleitringe 3, 4 umgebenden zentralen Ringraum D, von wo das Kühlmedium von der Pumpvorrichtung 11 angesaugt wird. Im Dichtspalt erzeugte oder auf andere Weise der Gleitringdichtung zugeführte Wärme wird dadurch dem vom Inneren der Kühlrohre 16 gebildeten Primärkreis des Wärmetauschers 10 zugeführt und durch die Rohrwandungen hindurch an das Kühlwasser abgegeben, das die Kühlrohre 16 außen umspült und das durch die Zulaufbohrung 19 zugeführt und durch die Ablaufbohrung 18 wieder abgeführt wird.

In dem Deckel 7 des Dichtungsgehäuses, und zwar im Bereich des zweiten Ringraumes C, ist ein als ringförmiger, die Welle 1 umgebender Körper ausgebildetes Magnetfilter 12 eingelassen.

Nach Lösen der Muttern 8a läßt sich der Deckel 7 in Axialrichtung abziehen, wodurch das daran gehaltene Magnetfilter 12 und der zweite Gleitring 4 für Wartungsarbeiten freiliegen. Zusätzlich wird auch das Innere des Wärmetauschers 10 für die Reinigung zugänglich. die aus der Innenwand 13, den beiden Rohrböden 14, 15 und den Kühlrohren 16 bestehende Baueinheit läßt sich ebenfalls in axialer Richtung herausziehen, wodurch auch das Äußere der Kühlrohre für eine Reinigung freigelegt wird, Wartungsmaßnahmen an der Pumpvorrichtung 11 durchführbar sind und eventuelle Verschleißerscheinungen auch am ersten Gleitring 3 beobachtet werden können.

Die Fließrichtung des Mediums in der Kreislaufführung kehrt sich um, wenn der Drehsinn der Welle 2 umgekehrt wird. Eine Umkehrung der Fließrichtung läßt sich bei Beibehaltung des vorgegebenen Wellendrehsinns erreichen, wenn die Gangrichtung vom Innengewinde 11b und Außengewinde 11a umgekehrt wird.

## Ansprüche

1. Gleitringdichtung zur Abdichtung einer durch die Öffnung einer Wandung herausgeführten Welle, mit einem drehfest an der Welle gehaltenen und gegen diese abgedichteten ersten Gleitring und einem drehfest bezüglich der Wandung gehaltenen und gegen diese abgedichteten zweiten Gleitring, von denen einer in Axialrichtung verschieblich gelagert und mittels Federn gegen den anderen angedrückt ist, sowie mit einer Kühleinrichtung, enthaltend einen die Welle konzentrisch umgebenden, in einem von einer Aussenwand und einer Innenwand des Dichtungsgehäuses begrenzten zylindrischen Hohlraum angeordneten Rohr-Wärmetauscher, dessen Sekundärkreis mit Kühlwasser beschickbar ist und dessen Primärkreis Bestandteil einer ein Kühlmedium am Dichtspalt der Gleitringe vorbeileitenden, internen Kreislaufführung ist, die einen zwischen der Innenwand und der Welle verlaufenden ringförmigen Rezirkulationskanal enthält, der eine von der Welle angetriebene Pumpvorrichtung und einen den Dichtspalt der Gleitringe umgebenden Ringraum aufweist, **dadurch gekennzeichnet,** daß der Wärmetauscher (10) eine Mehrzahl von im wesentlichen parallel zur Achse (2a) der Welle (2) verlaufende Kühlrohre (16) enthält, die mit ihren einen Enden in einem ersten Rohrboden (14) und mit ihren anderen Enden in einem zweiten Rohrboden (15) abdichtend gehalten sind, daß die Rohrböden jeweils ringförmig ausgebildet und koaxial zur Achse (2a) der Welle (2) angeordnet sind, sowie zusammen mit der Innenwand (13), der Außenwand (17a) und den von außen mit Kühlwasser beaufschlagten Kühlrohren (16) den Sekundärkreis begrenzen, daß jedem Rohrboden (14, 15) axial ein vom Dichtungsgehäuse (6) begrenzter, mit dem Inneren der Kühlrohre (16) kommunizierender Ringraum (B, C) vorgelagert ist und daß beide Ringräume durch den Rezirkulationskanal miteinander verbunden sind.

2. Gleitringdichtung nach Anspruch 1, **dadurch gekennzeichnet,** daß die im wesentlichen rohrförmig ausgebildete Innenwand (13) des Wärmetauschers (10) an die inneren Umfänge der beiden Rohrböden (14,15) angeschlossen ist und mit den Rohrböden fest verbunden oder einstückig mit diesen ausgebildet ist.

3. Gleitringdichtung nach Anspruch 1 oder 2, **dadurch gekennzeichnet,** daß die im wesentlichen rohrförmig ausgebildete Außenwand (17a) des Wärmetauschers (10) einen radial nach außen vorstehenden Flansch (17b) aufweist, durch den eine Zulaufbohrung (19) und eine winkelig hierzu versetzte Ablaufbohrung (18) vom Sekundärkreis der Wärmetauschers nach außen geführt ist und daß der Flansch (17b) einen Bestandteil des Dichtungsgehäuses (6) bildet.

4. Gleitringdichtung nach Anspruch 1, 2 oder 3, **dadurch gekennzeichnet,** daß der erste Rohrboden (14) einen bezüglich des Innendurchmessers der Außenwand (17a) im wesentlich gleichen Durchmesser aufweist und im Bereich seines äußeren Umfanges an der Außenwand abgestützt und gegen diese abgedichtet ist und daß der zweite Rohrboden (15) einen bezüglich des Innendurchmessers der Außenwand (17a) größeren Durchmesser aufweist und im Bereich seines äußeren Umfanges gegen die Außenwand bzw. den Flansch (17b) abgedichtet sowie radial und in einer Axialrichtung gelagert ist, dergestalt, daß die aus den Rohrböden (14, 15), der Innenwand (13) und den Kühlrohren (16) bestehende Baueinheit in Axialrichtung in die Aussenwand einschiebbar und ausbaubar ist.

5. Gleitringdichtung nach Anspruch 1, **dadurch gekennzeichnet,** daß die Pumpvorrichtung (11) aus einem an der Welle (2) festen Außengewinde (11a) und einem davon berührungslos umgebenen, am Dichtungsgehäuse (6) festen Innengewinde (11b) entgegengesetzter Gangrichtung besteht.

6. Gleitringdichtung nach Anspruch 1 oder 5, **dadurch gekennzeichnet,** daß der erste Gleitring (3), der zweite Gleitring (4) und die Pumpvorrichtung (11) im wesentlichen innerhalb des durch die Rohrböden (14, 15) definierten axialen Längenabschnittes radial innerhalb der Innenwand (13) des des Wärmetauschers (10) angeordnet sind.

7. Gleitringdichtung nach Anspruch 5, **dadurch gekennzeichnet,** daß das Innengewinde (11b) der Pumpvorrichtung (11) an der Innenwand (13) oder einem daran festen Bauteil ausgebildet ist und daß das Außengewinde (11a) an einer radial außen gelegenen Umfangsfläche des ersten Gleitrings (3) oder eines damit abdichtend und drehfest verbundenen Bauteils ausgebildet ist.

8. Gleitringdichtung nach Anspruch 1, **dadurch gekennzeichnet,** daß das Dichtungsgehäuse (6) an seinen von der Wandung (1) abgekehrten Stirnseite einen abnehmbaren Deckel (7) enthält, dessen innere Wandfläche einen Ringraum (C) begrenzt.

9. Gleitringdichtung nach Anspruch 1, 3, 4 und 8, **dadurch gekennzeichnet,** daß zwischen Deckel (7) und einem der Wandung (1) benachbarten oder mit dieser einstückig ausgebildeten Gehäuseteil der Flansch (17b) und der radial äussere Teil (15a) des zweiten Rohrbodens (15) lösbar eingespannt sind.

10. Gleitringdichtung nach Anspruch 8, **dadurch gekennzeichnet,** daß der Deckel (7) im Bereich seiner Durchtrittsöffnung (7a) für die Welle (2) einen rohrförmigen Ansatz (7b) aufweist, der axial nach innen in das Dichtungsgehäuse (6) einsteht, daß der zweite Gleitring (4) auf einer zylindrischen Umfangsfläche dieses Ansatzes axial verschieblich geführt und mittels einer Sekundärdichtung gegen diese Umfangsfläche abgedichtet ist und daß zwischen dem Außenumfang des zweiten Gleitringes (4) bzw. seiner Trägerhülse (4a) und der Innenwand (13) der ringförmige Rezirkulationskanal verläuft.

11. Gleitringdichtung nach Anspruch 1, **dadurch gekennzeichnet,** daß in der Kreislaufführung für das Kühlmedium ein Magnetfilter (12) angeordnet ist.

12. Gleitringdichtung nach Anspruch 11, **dadurch gekennzeichnet,** daß das Magnetfilter (12) als die Welle (2) umschließender Ringkörper ausgebildet ist.

13. Gleitringdichtung nach Anspruch 12, **dadurch gekennzeichnet,** daß das Magnetfilter (12) in einem der Ringräume (B, C) angeordnet ist.

14. Gleitringdichtung nach Anspruch 8 und 13, **dadurch gekennzeichnet,** daß das Magnetfilter (12 ) am Deckel ( 7 ) befestigt oder in einer Aussparung des Deckels gehalten ist.

15. Gleitringdichtung nach Anspruch 1, **dadurch gekennzeichnet,** daß der der Wandung (1) benachbarte Ringraum (B) mit dem abdichtenden Raum (H) über eine Drosselstrecke verbunden ist.

16. Gleitringdichtung nach Anspruch 15, **dadurch gekennzeichnet,** daß die Drosselstrecke durch die die Welle (2) eng umschließende Öffnung (1a) der Wandung (1) gebildet ist.

FIG. 1

FIG. 2